# EUROPEAN PATENT APPLICATION

(11) **EP 2 642 793 A1**
(43) Date of publication of application: **25.09.2013**
(21) Application number: 13001205.7
(22) Date of filing: 11.03.2013
(51) Int. Cl.: H04W 36/32, H04W 36/04, H04W 36/14

(54) **Handoff Determination in a Heterogeneous Network**

(30) Priority: 19.03.2012 US 201213423440
(71) Applicant: Broadcom Corporation, Irvine, CA 92617 (US)
(72) Inventor: Carmon, Rafael, 75676 Rishon Lezion (IL); Volloch, Yoav, 44377 Kfar-Saba (IL)
(74) Representative: Jehle, Volker Armin

(57) **Abstract**

Provided is coordinating user equipment handover in a heterogeneous network cell (202) that includes a plurality of overlaying cell layers (102, 104, 106). An access controller (144) of a network core (142) receives (502) a first parameter relating to signal quality for the user equipment with a serving cell of a cell layer of the plurality of overlaying cell layers (102, 104, 106), and receives (504) a second parameter based upon a velocity estimation of user equipment within the heterogeneous network cell. When the first parameter indicates (510) a cell boundary, the access controller forms a handoff decision to a cell base station of a cell layer of the plurality of overlaying cell layers based upon the second parameter (512), and initiates a handoff (514) to the cell base station based upon the handoff decision.

## Description

### TECHNICAL FIELD

The subject matter relates generally to communication systems; and, more particularly, to wireless cell or handoff determination for user equipment in a heterogeneous network.

### DESCRIPTION OF RELATED ART

Traditionally, cellular networks were based on macro base stations. These macro base stations were transmitting at relatively high power and were intended to maximize coverage for user equipment (UE).

Through the evolution of the cellular technologies (for example, 2G to 2.5G, 2.5G to 3G, 3G to 4G, such as GSM, GPRS, UMTS, HSPA, LTE, et cetera), low power and more localized base stations concepts appear (for example, pico cells, femto cells).

Macro base stations were intended to universally service all user equipment; however, broadband and application usage caused conflicts and interference with the user equipment, such as through near-far interference. Heterogeneous networks sought to support a greater variety of traffic types, including varying data rates, cellular wireless, cellular data, local area network data, high speed packet access, and the like. However, problems result from the exponential increase in the number of base stations in a heterogeneous network cell, giving rise to frequent user device handoffs. The increase in handoff rate brought on quality of service degradation, loss of load control, and as a result, dropped connections to the user equipment.

### BRIEF SUMMARY OF THE INVENTION

According to an aspect, an access controller is provided to coordinate user equipment handover in a heterogeneous network cell including a plurality of overlaying cell layers, each cell layer differing in base station density, the access controller comprising:
a processing module;
memory coupled to the processing module, wherein the memory stores operational instructions that cause the processing module to:
   receive a first parameter relating to signal quality for the user equipment with a serving cell of a cell layer of the plurality of overlaying cell layers;
   receive a second parameter based upon a velocity estimation of the user equipment within the heterogeneous network cell;
   when the first parameter indicates a cell boundary, form a handoff decision to a cell base station of a cell layer of the plurality of overlaying cell layers based upon the second parameter; and
   initiate a handoff to the cell base station based upon the handoff decision.

Advantageously, the memory further stores operational instructions that cause the processing module to:
receive a third parameter relating to a quality of service (QoS) level for the user equipment; and
modify the handoff decision based upon the third parameter when the cell base station of the cell layer of the plurality of overlaying cell layers does not sufficiently support the quality of service level.

Advantageously, the memory further stores operational instructions that cause the processing module to:
receive a fourth parameter relating to a sustained data rate of an application of the user equipment; and
further modify the handoff decision based upon the fourth parameter when the cell base station of the cell layer of the plurality of overlaying cell layers does not sufficiently support the sustained data rate of the application of the user equipment.

Advantageously:
when the second parameter exceeds a first threshold, the handoff decision includes the cell base station of the cell layer that has a low base station density; and
when the second parameter exceeds a second threshold, the handoff decision includes the cell base station of the cell layer that has a highest base station density.

Advantageously, when the second parameter exceeds neither of the first threshold and the second threshold, the handoff decision includes the cell base station of the cell layer that has a moderate base station density.

Advantageously, the plurality of overlaying cell layers include a macro cell layer having a low base station density, a micro cell layer having a moderate base station density, and a femto cell layer having a highest base station density.

Advantageously, the second parameter based upon the velocity estimation of the user equipment within the heterogeneous network cell includes at least one of:
Doppler phase estimation;
round trip delay estimation; and
global positioning satellite (GPS) report.

Advantageously, the heterogeneous network cell is based upon at least a version of the IEEE 802.21 specification and a version of an IEEE 802.11 specification.

According to an aspect, a method is provided for coordinating user equipment handover in a heterogeneous network cell including a plurality of overlaying cell layers, each cell layer differing in base station density, the method comprising:
receiving a first parameter relating to signal quality for the user equipment with a serving cell of a cell layer of the plurality of overlaying cell layers;
receiving a second parameter based upon a velocity estimation of the user equipment within the heterogeneous network cell;
when the first parameter indicates a cell boundary, forming a handoff decision to a cell base station of a cell layer of the plurality of overlaying cell layers based upon the second parameter; and
initiating a handoff to the cell base station based upon the handoff decision.

Advantageously, the method further comprises:
receiving a third parameter relating to a quality of service level for the user equipment; and
modifying the handoff decision based upon the third parameter when the cell base station of the cell layer of the plurality of overlaying cell layers does not sufficiently support the quality of service level.

Advantageously, the quality of service level is a negotiated quality of service level.

Advantageously:
when the second parameter exceeds a first threshold, the handoff decision includes the cell base station of the cell layer that has a low base station density; and
when the second parameter exceeds a second threshold, the handoff decision includes the cell base station of the cell layer that has a highest base station density.

Advantageously, when the second parameter neither exceeds either of the first threshold and the second threshold, the handoff decision includes the cell base station of the cell layer that has a moderate base station density.

Advantageously, the plurality of cell layers include a macro cell layer having a low base station density, a micro cell layer having a moderate base station density, and a femto cell layer having a highest base station density.

Advantageously, the second parameter based upon a velocity estimation of the user equipment within the heterogeneous network cell includes at least one of:
Doppler phase estimation;
round trip delay estimation; and
global positioning satellite (GPS) report.

Advantageously, the heterogeneous network cell is based upon at least a version of an IEEE 802.21 specification and a version of an IEEE 802.11 specification.

According to an aspect, a method is provided for use in user equipment to facilitate handoff in a heterogeneous network cell, the method comprising:
engaging a first cell base station of the heterogeneous network cell that includes a plurality of overlaying cell layers, each cell layer differing in base station density, wherein the first cell base station provides session support to the user equipment based upon a data rate and quality of service characteristics of a session;
sensing movement of the user equipment within the heterogeneous network cell;
determining a rate of movement of the user equipment;
transmitting the determined rate of movement; and
engaging, responsive to a received handoff command, in the handoff to a second cell base station of the heterogeneous network cell when the first cell base station is unable to support characteristics of the session, wherein the second cell base station belongs to a cell layer having a base station density sufficient to the determined rate of movement of the user equipment.

Advantageously, the determining the rate of movement of the user equipment includes at least one of:
Doppler phase estimation;
round trip delay estimation; and
global positioning satellite (GPS) report.

Advantageously, the plurality of overlaying cell layers include a macro cell layer having a low base station density, a micro cell layer having a moderate base station density, and a femto cell layer having a highest base station density.

Advantageously, the heterogeneous network cell is based upon at least a version of an IEEE 802.21 specification and a IEEE 802.11 specification.

### BRIEF DESCRIPTION OF THE DRAWINGS

FIG. 1 illustrates a heterogeneous network in accordance with an embodiment of the invention.
FIG. 2 illustrates a heterogeneous network cell in accordance with an embodiment of the invention.
FIG. 3 is a block diagram illustrating user equipment in accordance with an embodiment of the invention.
FIG. 4 is a block diagram illustrating an access controller constructed in accordance with an embodiment of the invention.
Figure 5 is a flow chart illustrating a method for coordinating user equipment handover in a heterogeneous network cell in accordance with an embodiment of the invention.
Figure 6 is a flow chart illustrating a method for use in user equipment to facilitate handoff in a heterogeneous network cell in accordance with an embodiment of the invention.

### DETAILED DESCRIPTION OF THE DRAWINGS

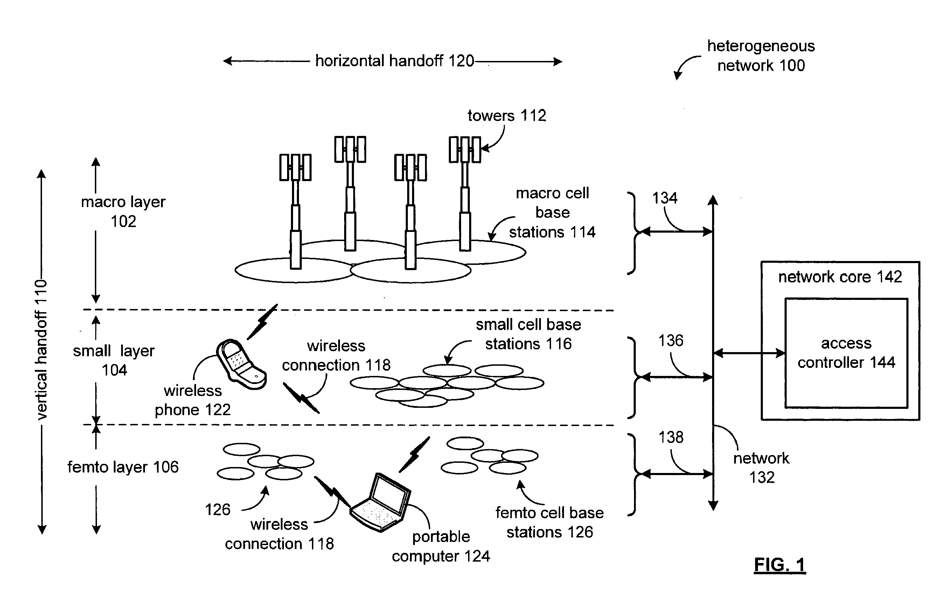

Figure 1 is an illustration of a heterogeneous network 100. The heterogeneous network 100 includes a macro layer 102, a small layer 104, and a femto layer 106. As should be appreciated, the layers are shown in a stacked relation; however, deployment is generally oriented along a plane defined by local terrain.

Each of the layers 102, 104 and 106 differs in base station density for a given cell area. For example, the macro layer 102 includes macro cell base stations 114 with towers 112, which can provide a large wireless coverage area per each base station unit, and provide wireless service based upon Long Term Evolution (LTE) specifications, GSM specifications, High Speed Packet Access (HSPA), HSPA evolution (HSPA+), Global System for Mobile communications (GSM), et cetera.

The small layer 104 may have a moderate cell base station density as compared to a macro cell base station. As an example, six small cell base stations 116 per a macro sector (three sectors per macro cell) are not uncommon. A small cell base station 116 may have an effective service range of up to one kilometer and for up to two-hundred UE subscribers.

The femto layer 106 has the highest cell base station density as compared to a macro cell base station. For example, 180 access points, or femto cell base stations 126, per macro sector (three sectors per macro cell) is not uncommon. The femto layer cells or access points include pico cell technologies, femto cell technologies, WiFi or IEEE 802.11 technologies, et cetera. A femto cell base station 126 has an effective range of about fifteen-to-fifty meters, and is generally used in residences and small enterprises in support of up to eight UE subscribers. A pico cell can provide service coverage indoors and outdoors for up to 16 UE subscribers.

Generally, the heterogeneous network 100 provides a solution to the conflicts and interference otherwise found in homogenous macro cell base station deployments. Also, as another consideration, because mobile data usage nearly doubles each year, deployment capacity in a macro cell based network cannot also increase at that rate. Smaller cells of a heterogeneous network 100 supplement coverage in areas where macro cells service would be overkill in view of the overhead and complexity. The stacked layer effect of the heterogeneous network 100 serves to improve signaling integrity, uplink and downlink data rates, network capacity, and provide low latencies.

But the increase in the number of base stations and cells within a given area complicates the handoff process due to varying mobility rate of the user equipment (UE), such as the wireless phone 122 and portable computer 124, and other user equipment, such as PDAs, tablet computers, et cetera, having wireless connection 118 capability with the base stations 114, 116 and 128. In the example provided, a heterogeneous network handoff may in effect be a vertical handoff 110 along the layers 102, 104 and 106, or a horizontal handoff 120 within a layer.

The handoff or handover consideration user equipment may require differing data rates based upon the application executing on the device; Quality of Service (QoS) requirements for different mobility content such as video playback from cloud networks, or for voice calls, whether circuit switched cellular or data packet based. The added complexity leads to service degradation, loss of load control, and risk for dropped service, frustrating the UE service subscriber.

The user equipment handoff is further complicated by the movement of the device in a heterogeneous cell - that is, the duration that the UE may remain within a given service area in view of its movement before another handoff being required, as well as the availability of service resources.

Coordination of the handoff is coordinated by a network core 142, which may include an access controller 144. The access controller 144 may also be implemented as a form of base station controller. The access controller 144 receives status information from the base stations 114, 116 and 126 via communication paths 134, 136 and 138, respectively. The communication paths may be coupled to a network 132 to facilitate the routing of the information to the access controller 144 and to other components of the heterogeneous network 100.

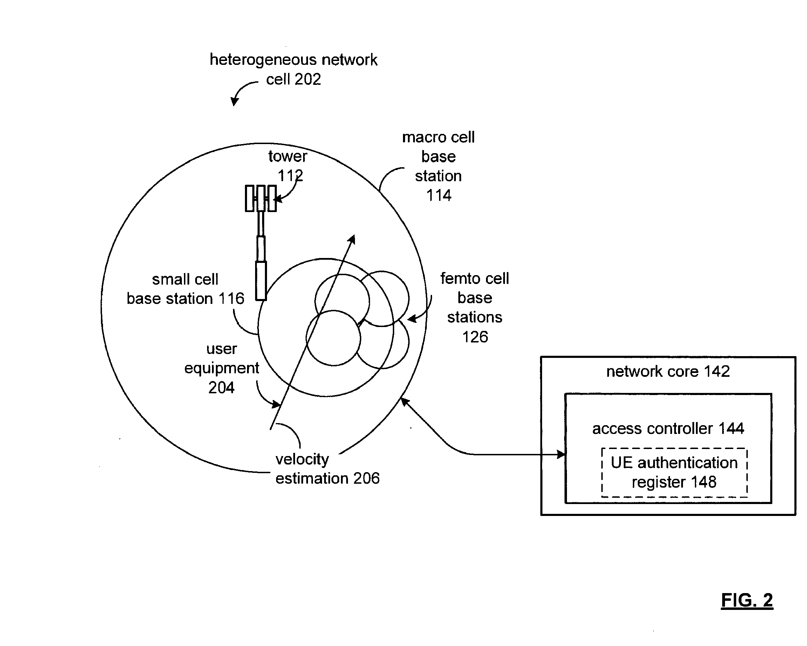

Movement of the UE (e.g., wireless phone 122, portable computer 124) is monitored by the access controller 144 such that handoff decisions to a cell base station of a cell layer 102, 104 or 106 may be initiated to provide service to the UE. Handoff of the UE between cell base stations of the heterogeneous network 100 is discussed in detail with respect to Figures 2 to 6.

Figure 2 illustrates an embodiment of a heterogeneous network cell 202 showing the service area of the overlaying cell layers provided by a micro cell base station 114, a small cell base station 116, and femto base stations 126. The interrelationship of the base station service areas are not shown to scale for simplicity purposes.

Each of the base stations of the heterogeneous network cell 202 includes a service area boundary. A handover of user equipment 204 refers to the process of transferring an ongoing session with the user equipment 204 from one cell base station to another.

Handoffs, or handovers, are generally based upon a parameter having a relatively short time factor, such as receive signal strength (RSS), bit error rate (BER), signal-to-interference plus noise ratio (SINR), et cetera. In the present example of Figure 2, these parameters relating to signal quality for the user equipment with a serving cell, as provided by either of the macro cell base station 114, the small cell base station 116, and femto cell base stations 126.

The parameter relating to signal quality, when coming within a given threshold, would trigger handoff procedures, which the access controller 114 coordinates among the network, and with the heterogeneous network cell 202 as provided by the present example.

Because frequent handovers between base stations 116 and 126 might be result by the UE 204 mobility, the velocity estimation 206 for the UE 204 is taken into consideration to prevent overly frequent handovers either horizontally between base stations of a layer or vertically in the overlaid layers 102, 104, and 106 (see Figure 1). Without taking velocity into consideration for the handover, the result is in excessive handoffs causing disruption in service continuity, loss in service quality, and likely dropped calls, particularly with cells in the layer based upon femto cell base stations 126.

To facilitate smooth handoffs of the user equipment, the macro cell base station 114, small cell base station 116, and femto cell base stations 126 each provide a velocity estimation 206 for the user equipment served by the heterogeneous network cell 202, such as user equipment 204. As may be appreciated, a velocity estimation 206 may be provided by a single base station. Multiple velocity estimations 206 provided by multiple base stations to the network core 142 and access controller 144 may also be provided to mitigate erroneous velocity estimations (for example, a first femto cell base station 126 provides a velocity estimation of 30 mph, where other base stations in the cell 202 provide velocity estimations of 2 mph).

Additional parameters may be periodically provided by the base stations (or on request by the access controller 144) to further improve handover objectives such as sustaining service quality and continuity. Another parameter includes the nature of the application executed by the user equipment 204, and the sustained data rate for the application. For example, the sustained data rate pertains to whether the application is a real-time application (for example VoIP session, circuit switch Voice, video streaming) or an application more tolerant of bursty, or inconsistent, data transmissions (for example, Internet browsing or file download). A further parameter is a data rate requested for suitable quality of service (QoS) for the user equipment 204.

With these parameters provided by the base stations 114, 116 and 126, the network core 142, with access controller 144, operates to aggregate and use these parameters in forming handoff decision, specifically to which base station the user equipment should next camp after the handoff.

Further, the parameters can be provided as an average weighting factor for handoff decisions to a macro cell base station 114, a small cell base station 116, or femto cell base station 126. Specifically the average weighting factor taking into consideration the velocity estimation parameter, the QoS factor parameter, and the data rate parameter.

In operation, when the velocity estimation, either singular, aggregate, or averaged, exceeds a threshold, the handoff decision includes a cell base station of a cell layer that has a low base station density, such as a macro cell base station 114. As an example, the velocity estimation parameter, or aggregated velocity estimation parameter, indicates high speed user equipment (e.g., 50 kmh) by exceeding a high speed threshold, has a data rate parameter with a low rate, and has an application parameter indicating a real time application executing by the user equipment. The handoff decision by the access controller is to a macro cell base station 114, which would be a vertical handoff from either of the femto cell base stations 126 or the small cell base station 116.

In another instance, when the velocity estimation exceeds or comes within another threshold indicating sufficiently static speed, the handoff decision includes a cell base station of a cell layer that has a highest base station density, such as the femto cell layer that includes femto cell base stations 126. For another example, the velocity estimation parameter, or aggregated velocity estimation parameter, indicates a substantially static speed user equipment (e.g., 3 to 5 kmh, such as a pedestrian) that exceeds or comes within a static threshold, has a data rate parameter with a high data rate, and has an application parameter indicating a non-real-time application executing by the user equipment 204 (for example, Internet browsing). The handoff decision by the access controller 144 is to a femto cell base station 126, which would be a vertical handoff from either of a macro cell base station 114 or a small cell base station 116, or a horizontal handoff to another femto cell base station 126.

In a further instance, when the velocity estimation 206 exceeds neither of the first threshold for high speed the second threshold for static speed, the handoff decision includes a cell base station of a cell layer that has a moderate base station density, such as the small cell base station 116. For yet another example, the user equipment comes between a high velocity threshold and a substantially static velocity estimation threshold, sustain the wireless service, the handoff decision by the access controller 144 is to a small cell base station 116, which would be a vertical handoff from either of a macro cell base station 114 or a femto cell base station 126 to the small cell base station 116, or a horizontal handoff to another small cell base station 116 (not shown for clarity).

As shown by the example of Figure 2, forming a handoff decision based upon a velocity estimation parameter, either singularly from a base station or aggregated from multiple base stations of the heterogeneous network cell 202, minimizes the overall number and frequency of UE handovers in the system. Moreover, such consideration reduces the control load and call drops in the system, while enhancing the user experience, QoS and satisfaction. Also taking into consideration further parameters relating to the nature of the applications executed on the UE and the applicable QoS data rates serve to further refine the handoff decision in the context of the heterogeneous network cell 202.

Furthermore, handoff of user equipment may be further enhanced by authentication to the components of the heterogeneous network structure. For example, when user equipment passes out of range of an access point, such as that provided by femto cell base stations 126 into a coverage area servicing cellular communications or even no communications, and then passes back into range provided by femto cell base stations 126, the user oftentimes would be required to re-register before accessing the base station.

Once user equipment 204 is registered with a cell base station, such as a WiFi base station or femto cell base station 126, information from the access session is passed to a shared UE authentication register 148 accessible by the cell base stations of the heterogeneous network cell 202 and network 100. The shared register may also be local to a base station, as well as stored with the access controller 144 of the network core 142. Shared registration and authentication of user equipment or mobile stations is discussed in detail in U.S. Utility Application Serial No. 13/231,379, entitled "Controlling and Enhancing Handoff between Wireless Access Points," (Attorney Docket No. BP2572C2), filed September 13, 2011, which is hereby incorporated herein by reference in its entirety and made part of the present U.S. Utility Patent Application for all purposes.

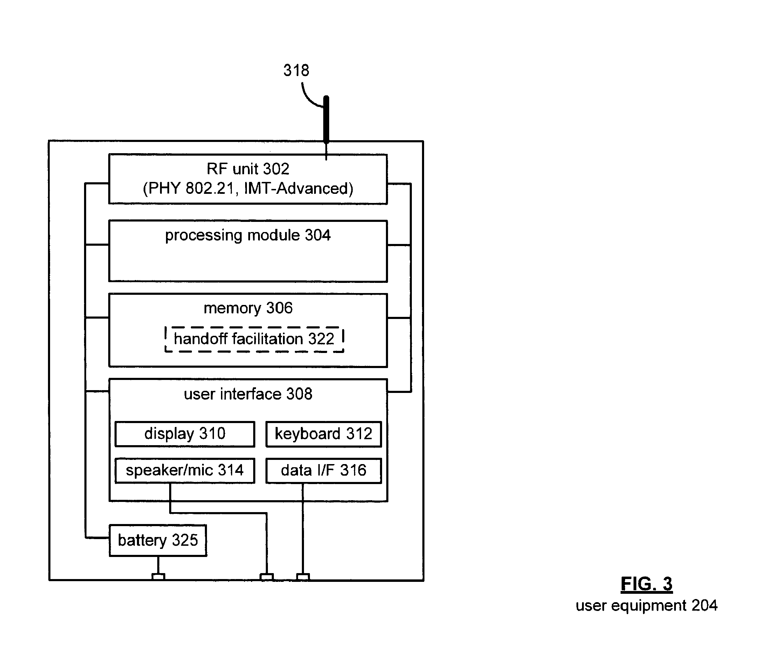

Figure 3 is a block diagram illustrating of user equipment 204. The user equipment 204, such as wireless phone 122 or portable computer 124 (see Figure 1) supports standardized operations that are compatible with the teachings of the disclosure, with or without modification. In other embodiments, however, the user equipment 204 may support other operating standards.

The user equipment 204 includes an RF unit 302 implementing a physical layer in support of various protocol specifications deployed by a heterogeneous network 202 (such as that of IEEE 802.21, IMT-Advanced, et cetera), a processing module 304, and a memory 306. The RF unit 302 couples to an antenna 318 that may be located internal or external to the case of the user equipment 204. The processing module 304 may be an Application Specific Integrated Circuit (ASIC) or another type of processor that is capable of operating the user equipment 204.

The memory 306 may include both static and dynamic components, for example, dynamic RAM, static RAM, ROM, EEPROM, et cetera. In some embodiments, the memory 306 may be partially or fully contained upon an ASIC or other IC that also includes the processing module 304.

A user interface 308 includes a display 310, a keyboard 312, a speaker/microphone 314, and a data interface 316, and may include other user interface components. The RF unit 302, the processing module 304, the memory 306, and the user interface 308 couple via one or more communication buses/links. A battery 325 also couples to and powers the RF unit 302, the processing module 304, the memory 306, and the user interface 308.

Operational instructions 322 to facilitate handoff in a heterogeneous network are stored in memory 306. The operational instructions are loaded to the processing module 304 for execution by the processing module 304. The operational instructions 322 may be programmed into the user equipment 204 at the time of manufacture, during a service provisioning operation, such as an over-the-air service provisioning operation, or during a parameter updating operation. Upon execution, the operational instructions 322 cause the user equipment 204 to perform operations according to the present invention previously described with reference to Figures 1 through 6.

The structure of the user equipment 204 illustrated is only an example of one user equipment structure. Many other varied user equipment structures could be operated according to the teachings of the present disclosure. Upon execution of the operational instructions 322, the user equipment 204 performs operations according to the present invention previously described herein in facilitating handoff in a heterogeneous network 100 (see Figure 1 and Figure 2).

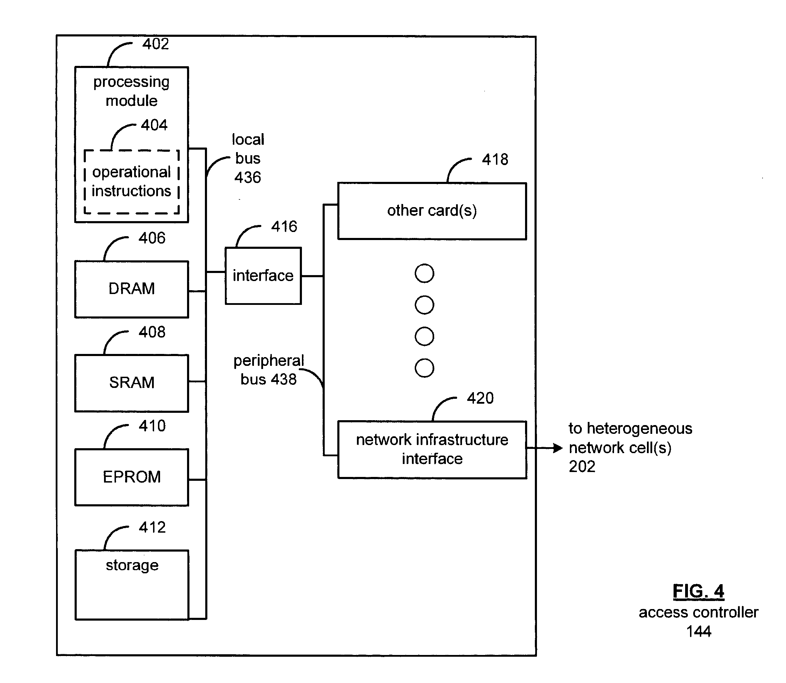

Figure 4 is a block diagram illustrating an access controller 144 of the network core 142 constructed according to an embodiment of the invention. The access controller 144 includes a processing module 402, dynamic RAM 406, static RAM 408, EPROM 410, and at least one data storage device 412, such as a hard drive, optical drive, tape drive, et cetera. These components (which may be contained on a peripheral processing card or module) intercouple via a local bus 436 and couples to a peripheral bus 438 (which may be a back plane) via an interface 416. Peripheral cards couple to the peripheral bus 338. The peripheral cards include a network infrastructure interface card 420, which couples the access controller 144 to the heterogeneous network cell or cells 202. Additional cards 318 may be provided with respect to coupling to other networks, or other functionality.

Structures and operational instructions 404 regarding coordinating user equipment handover in a heterogeneous network cell are stored in storage 412. The operational instructions 404 are downloaded to the processing module 402 and/or the DRAM 406 for execution by the processing module 402. While the operational instructions 404 are shown to reside within storage 412 within the access controller 144, the operational instructions may also be loaded onto portable media such as magnetic media, optical media, or electronic media. Further, the operational instructions 404 may be electronically transmitted from one computer to another across a data communication path.

Upon execution of the operational instructions 404, the access controller 144 performs operations according to the methods and processes described herein with reference to Figures 1 through 6. The structure of the access controller 144 illustrated is only one of many varied access controller structures that could be operated according to the descriptions contained herein.

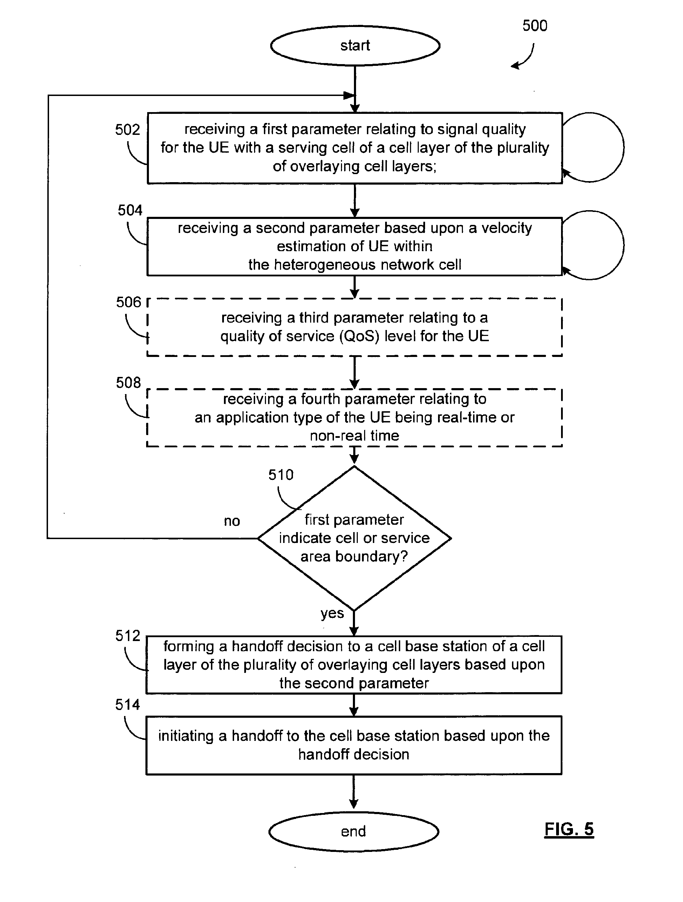

Figure 5 is a flow chart that illustrates a method 500 for coordinating user equipment handover in a heterogeneous network cell. The heterogeneous network cell includes a plurality of overlaying cell layers, each cell layer differing in base station density. At step 502, the method receives a first parameter relating to signal quality for the user equipment with a serving cell of a cell layer of the plurality of overlaying cell layers. At step 504, the method is receiving a second parameter based upon a velocity estimation of the user equipment within the heterogeneous network cell. The velocity estimation may be based on a variety estimation techniques, alone or in combination, such as Doppler phase estimation, round trip delay estimation, global positioning satellite (GPS) report, et cetera. Moreover, the velocity estimation may be an aggregate of estimations from the plurality of base stations of the heterogeneous network cell, as well as an averaged valuation to compensate for abnormal estimation results.

As depicted in Figure 5, steps 502 and 504 periodically repeat in view of the changing environment caused by the mobility of the user equipment. Further, the reception of the signal quality and/or the velocity estimation for the user equipment may be in response to a request for the parameter data. Such data may be considered stale as based upon a timer variable or other such mechanism or routine.

At steps 506 and 508, the method may further receive a third parameter relating to a quality of service (QoS) level for the user equipment, and receive a fourth parameter relating to an application type of the user equipment being real-time (such as VoIP communications, streaming audio and/or video) or non-real-time based (such as Internet browsing).

At step 510, when the first parameter indicates a cell boundary, the method 500 proceeds to step 512, forming a handoff decision to a cell base station of a cell layer of the plurality of overlaying cell layers based upon the second parameter relating to velocity estimation. Otherwise, the method returns to step 502.

With respect to forming a handoff decision the method 500 considers that when the second parameter exceeds a first threshold, the handoff decision includes a cell base station of a cell layer that has a low base station density having a large coverage area, such as a macro layer. In another aspect, when the second parameter exceeds a second threshold indicative of substantially static or low velocity, the handoff decision includes a cell base station of a cell layer that has a highest base station density, such as a femto layer with comparatively numerous base station access points to service user equipment. In a third aspect, the handoff decision is based upon when the second parameter relating to the velocity estimation neither exceeds the first threshold and the second threshold, the handoff decision includes a cell base station of a cell layer that has a moderate base station density, such as the small layer.

At step 514, the method continues by initiating a handoff to the cell base station based upon the handoff decision.

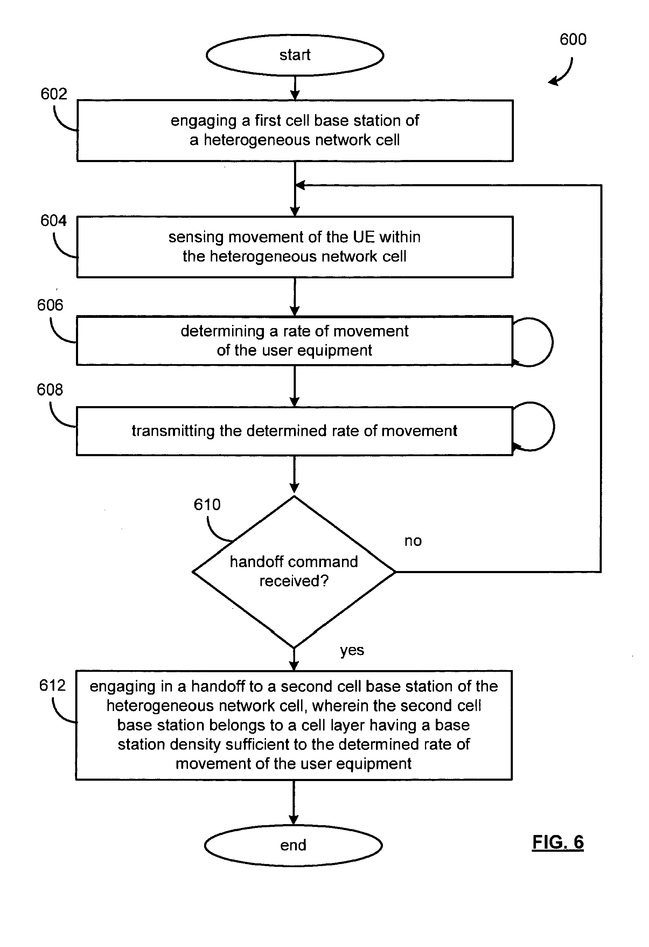

Figure 6 is a flow chart that illustrates a method 600 for use in user equipment (UE) to facilitate handoff in a heterogeneous network cell. At step 602, the method provides engaging a first cell base station of a heterogeneous network cell. The heterogeneous network cell includes a plurality of overlaying cell layers, each cell layer differing in base station density, wherein the first cell base station provides session support to the UE based upon a data rate and quality of service characteristics of a session.

The plurality of cell layers include a macro cell layer having a low base station density, a micro cell layer having a moderate base station density, and a femto cell layer having a highest base station density.

Step 604 continues by sensing movement of the UE within the heterogeneous network cell, and determining at step 606 a rate of movement of the user equipment. The rate of movement of the UE may be based upon a Doppler phase estimation, round trip delay estimation, global positioning satellite (GPS) report, et cetera, either alone or in combination.

At step 608, the method provides for transmitting the determined rate of movement. As depicted, steps 606 and 608 are periodically conducted to provide accurate estimation information regarding the user equipment. Moreover, the rate of movement may be conducted in response to a command and/or request to provide such determined velocity estimation.

The method then queries at step 610 whether a handoff command has been received. If not, the method returns to step 604. If so, then the method continues at step 612, engaging in a handoff to a second cell base station of the heterogeneous network cell. The second cell base station belonging to a cell layer of the heterogeneous network cell, the cell layer having base station density sufficient to support the determined rate of movement of the user equipment.

It is noted that the various modules described herein may be a single processing device or a plurality of processing devices. Such a processor or processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The operational instructions may be stored in a memory. The memory may be a single memory device or a plurality of memory devices. Such a memory device may be a read-only memory (ROM), random access memory (RAM), volatile memory, nonvolatile memory, static memory, dynamic memory, flash memory, and/or any device that stores digital information. It is also noted that when the processing module implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry. In such an embodiment, a memory stores, and a processing module coupled thereto executes, operational instructions corresponding to at least some of the steps and/or functions illustrated and/or described herein.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. An access controller to coordinate user equipment handover in a heterogeneous network cell including a plurality of overlaying cell layers, each cell layer differing in base station density, the access controller comprising:
a processing module;
memory coupled to the processing module, wherein the memory stores operational instructions that cause the processing module to:
receive a first parameter relating to signal quality for the user equipment with a serving cell of a cell layer of the plurality of overlaying cell layers;
receive a second parameter based upon a velocity estimation of the user equipment within the heterogeneous network cell;
when the first parameter indicates a cell boundary, form a handoff decision to a cell base station of a cell layer of the plurality of overlaying cell layers based upon the second parameter; and
initiate a handoff to the cell base station based upon the handoff decision.

2. The access controller of claim 1, wherein the memory further stores operational instructions that cause the processing module to:
receive a third parameter relating to a quality of service (QoS) level for the user equipment; and
modify the handoff decision based upon the third parameter when the cell base station of the cell layer of the plurality of overlaying cell layers does not sufficiently support the quality of service level.

3. The access controller of claim 2, wherein the memory further stores operational instructions that cause the processing module to:
receive a fourth parameter relating to a sustained data rate of an application of the user equipment; and
further modify the handoff decision based upon the fourth parameter when the cell base station of the cell layer of the plurality of overlaying cell layers does not sufficiently support the sustained data rate of the application of the user equipment.

4. The access controller of any preceding claim, wherein:
when the second parameter exceeds a first threshold, the handoff decision includes the cell base station of the cell layer that has a low base station density; and
when the second parameter exceeds a second threshold, the handoff decision includes the cell base station of the cell layer that has a highest base station density.

5. The access controller of claim 4, wherein when the second parameter exceeds neither of the first threshold and the second threshold, the handoff decision includes the cell base station of the cell layer that has a moderate base station density.

6. The access controller of any preceding claim, wherein the plurality of overlaying cell layers include a macro cell layer having a low base station density, a micro cell layer having a moderate base station density, and a femto cell layer having a highest base station density.

7. The access controller of any preceding claim, wherein the second parameter based upon the velocity estimation of the user equipment within the heterogeneous network cell includes at least one of:
Doppler phase estimation;
round trip delay estimation; and
global positioning satellite (GPS) report.

8. The access controller of any preceding claim, wherein the heterogeneous network cell is based upon at least a version of the IEEE 802.21 specification and a version of an IEEE 802.11 specification.

9. A method for coordinating user equipment handover in a heterogeneous network cell including a plurality of overlaying cell layers, each cell layer differing in base station density, the method comprising:
receiving a first parameter relating to signal quality for the user equipment with a serving cell of a cell layer of the plurality of overlaying cell layers;
receiving a second parameter based upon a velocity estimation of the user equipment within the heterogeneous network cell;
when the first parameter indicates a cell boundary, forming a handoff decision to a cell base station of a cell layer of the plurality of overlaying cell layers based upon the second parameter; and
initiating a handoff to the cell base station based upon the handoff decision.

10. The method of claim 9 further comprises:
receiving a third parameter relating to a quality of service level for the user equipment; and
modifying the handoff decision based upon the third parameter when the cell base station of the cell layer of the plurality of overlaying cell layers does not sufficiently support the quality of service level.

11. The method of claim 10 wherein the quality of service level is a negotiated quality of service level.

12. The method of any of claims 9 to 11, wherein:
when the second parameter exceeds a first threshold, the handoff decision includes the cell base station of the cell layer that has a low base station density; and
when the second parameter exceeds a second threshold, the handoff decision includes the cell base station of the cell layer that has a highest base station density.

13. The method of claim 12, wherein when the second parameter neither exceeds either of the first threshold and the second threshold, the handoff decision includes the cell base station of the cell layer that has a moderate base station density.

14. The method of any of claims 9 to 13, wherein the plurality of cell layers include a macro cell layer having a low base station density, a micro cell layer having a moderate base station density, and a femto cell layer having a highest base station density.

15. A method for use in user equipment to facilitate handoff in a heterogeneous network cell, the method comprising:
engaging a first cell base station of the heterogeneous network cell that includes a plurality of overlaying cell layers, each cell layer differing in base station density, wherein the first cell base station provides session support to the user equipment based upon a data rate and quality of service characteristics of a session;
sensing movement of the user equipment within the heterogeneous network cell;
determining a rate of movement of the user equipment;
transmitting the determined rate of movement; and
engaging, responsive to a received handoff command, in the handoff to a second cell base station of the heterogeneous network cell when the first cell base station is unable to support characteristics of the session, wherein the second cell base station belongs to a cell layer having a base station density sufficient to the determined rate of movement of the user equipment.
